# EUROPÄISCHE PATENTSCHRIFT

(11) **EP 3 161 364 B1**
(45) Veröffentlichungstag und Bekanntmachung des Hinweises auf die Patenterteilung: **15.08.2018**
(21) Anmeldenummer: 15722517.8
(22) Anmeldetag: 08.05.2015
(51) Int. Cl.: F16L 13/14, F16L 33/025, F16L 33/207

(54) **ROHRKLEMMANORDNUNG**
TUBE CLAMP ASSEMBLY
DISPOSITIF DE SERRAGE DE TUYAU

(30) Priorität: 25.06.2014 EP 14173871
(43) Veröffentlichungstag der Anmeldung: 03.05.2017
(73) Patentinhaber: Geberit International AG, 8645 Jona (CH)
(72) Erfinder: HEUSSER, Urs, CH-8722 Kaltbrunn (CH); GRAF, Pascal, CH-8132 Egg bei Zürich (CH); BACHMANN, Bastian Marc, CH-8852 Altendorf (CH)
(74) Vertreter: Frischknecht, Harry Ralph
(86) Internationale Anmeldenummer: PCT/EP2015/060175
(87) Internationale Veröffentlichungsnummer: WO 2015/197248

(56) Entgegenhaltungen:
- EP-A1- 0 073 048
- EP-A1- 2 497 989
- US-A- 5 195 788
- US-A1- 2006 082 156
- US-A1- 2007 134 980

## Beschreibung

### TECHNISCHES GEBIET

Die vorliegende Erfindung betrifft eine Rohrklemmanordnung nach dem Oberbegriff von Anspruch 1.

### STAND DER TECHNIK

Aus dem Stand der Technik sind Rohrklemmanordnungen mit Klemmringen bekannt.

Typischerweise umfassen Klemmringe ein Ohr, das mit einer Zange zusammenpressbar ist um den Klemmring auf einem zu verbindenden Rohrende festzuziehen. Beim Zusammenpressen des Ohrs schliesst sich ein Spalt des Klemmringes, wobei das zu verbindende Rohrende im Bereich dieses Spaltes nicht beaufschlagt wird. Die Pressung des Rohrendes ist deshalb ungleichmässig, was die Dichtigkeit der Verbindung beeinträchtigt.

Aus der EP 2 497 989 ist eine Rohrklemme bekannt geworden, bei welcher ein Spannring vorhanden ist. Der Spannring umfasst mindestens ein Schlitz, welcher im verpressten Zustand ganz oder teilweise aufgehoben wird. Der Spannring ist über einen Halterungsabschnitt gelagert, wobei beim Verpressen der Spannring vom Halterungsabschnitt getrennt wird.

Obwohl bezüglich der Dichtigkeit mit der Rohrklemme nach der EP 2 497 989 sehr gute Resultate erzielt worden sind, ergeht aus der EP 2 497 989 der Nachteil, dass es im Bereich des Übergangs zwischen dem Spannring und dem Halterungsabschnitt zu hohen Spannungen kommen kann, was zu einer nachteiligen Deformation des Spannrings führt.

### DARSTELLUNG DER ERFINDUNG

Ausgehend von diesem Stand der Technik liegt der Erfindung eine Aufgabe zugrunde, eine Rohrklemme anzugeben, welche die Nachteile des Standes der Technik überwindet. Insbesondere ist es eine Aufgabe der Erfindung eine Rohrklemme anzugeben, dessen Material beim Pressvorgang geringeren Belastungen ausgesetzt ist.

Diese Aufgabe löst der Gegenstand vom Anspruch 1. Demgemäss umfasst eine Rohrklemme zum Verbinden eines Rohres ein in ein Ende des Rohres einsteckbares Anschlussstück, einen Klemmring, der entlang seines Umfanges einen ringförmigen Abschnitt und ein sich radial nach aussen erstreckendes Ohr aufweist, das von einem Werkzeug zusammenpressbar ist, und ein durch den Klemmring zusammenpressbarer Spannring. Der Spannring kommt dabei mit der Rohroberfläche in Kontakt und über den Spannring wird eine Klemmkraft auf das Rohr bereitgestellt, welches dann gegen das Anschlussstück gedrückt wird. Der Spannring umfasst einen Lagerungsabschnitt und einen sich dem Lagerungsabschnitt anschliessenden Spannabschnitt. Der besagte Spannabschnitt ragt mindestens teilweise in den ringförmigen Abschnitt des Klemmrings ein und umgibt das Rohr im Wesentlichen vollständig. Weiter verfügt der Spannabschnitt über mindestens einen Schlitz, dessen lichte Weite im zusammengepressten Zustand des Klemmrings annähernd oder ganz aufhebbar ist. Der Spannring umfasst weiter mindestens eine Ausnehmung, welche sich mindestens in einem Endbereich des Schlitzes dem Schlitz anschliesst, wobei sich die lichte Weite bzw. der Querschnitt der mindestens einen Ausnehmung sich beim Zusammenpressen verkleinert.

Die Anordnung der Ausnehmung im Endbereich des Schlitzes hat den Vorteil, dass beim Verpressen des Klemmrings die Spannungsspitzen im Übergangsbereich Schlitz und Ausnehmung bzw. im Übergangsbereich Spannabschnitt und Lagerungsabschnitt die Spannungsspitzen reduziert werden können.

Die Ausnehmung durchdringt den Spannring in radialer Richtung zur Mittelachse und kann daher auch als Öffnung in der Seitenwand des Spannrings bezeichnet werden.

Besonders bevorzugt wird die lichte Weite der besagten Ausnehmung im zusammengepressten Zustand nicht vollständig aufgehoben. Die Ausnehmung als solche ist also auch noch im zusammengepressten Zustand vorhanden. Hierdurch kann eine besonders schonende Verformung im Bereich der Ausnehmung erreicht werden.
Vorzugsweise ist die lichte Weite der Ausnehmung quer zu einer sich mittig das Anschlussstück hindurcherstreckende Mittelachse gesehen im unverpressten und insbesondere auch im zusammengepressten Zustand grösser ist als die lichte Weite des Schlitzes, insbesondere im unverpressten Zustand, quer zur Mittelachse gesehen. Die lichte Weite der Ausnehmung in der besagten Querrichtung ist also grösser als die lichte Weite des Schlitzes im unverpressten Zustand.

Die lichte Weite der Ausnehmung weist erfindungsgemäss benachbart zum Schlitz eine maximale Breite auf, wobei die Breite der Ausnehmung mit zunehmenden Abstand zum Schlitz kleiner wird.
Vorzugsweise ist die Ausdehnung der Ausnehmung in Richtung der Mittelachse grösser als in Querrichtung zur Mittelachse.
Besonders bevorzugt hat die Ausnehmung im nicht-zusammengepressten Zustand quer zur Mittelachse gesehen die Form eines Trapez, wobei der Schlitz vorzugsweise über die längere der beiden Parallelseiten des Trapezes in das Trapez mündet. Alternativerweise kann die Ausnehmung auch rund, elliptisch, dreieckig oder pilzförmig ausgebildet sein.
Vorzugsweise ist die Ausnehmung bezüglich einer mittig sich durch den Schlitz erstreckenden Symmetrieachse symmetrisch. Alternativerweise kann die Ausnehmung auch asymmetrisch ausgebildet sein.
Vorzugsweise ist der Übergang zwischen dem Schlitz und der Ausnehmung gerundet ausgebildet, derart, dass Spannungsspitzen beim Verpressen reduzierbar werden.
Vorzugsweise ist die mindestens eine Ausnehmung derart am Spannring positioniert, dass die Ausnehmung nicht durch den Klemmring überdeckt ist. Hierdurch wird verhindert, dass der Klemmring beim Zusammenpressen die Bewegung des Spannrings im Bereich der. Ausnehmung negativ beeinflusst.

Die besagte Ausnehmung erstreckt sich vom Spannabschnitt gesehen in den Lagerungsabschnitt hinein, wobei der Lagerungsabschnitt bereichsweise vollständig um die Mittelachse umlaufend ausgebildet ist. Die Ausnehmung ist besonders bevorzugt ausschliesslich im Lagerungsabschnitt angeordnet und wird insbesondere nicht durch den Klemmring überdeckt.

Vorzugsweise ist pro Schlitz mindestens eine Ausnehmung angeordnet. Somit wird sichergestellt, dass die positiven Effekte bei jedem der Schlitze vorhanden sind.

Besonders bevorzugt schliesst sich dem Schlitz beidseitig eine Ausnehmung an. Jeder Schlitz weist in dieser Variante je eine Ausnehmung an seinem jeweiligen Ende auf. Der Schlitz und die Ausnehmung sind bei einer Betrachtung quer zur Mittelachse hantelförmig ausgebildet.

In einer Weiterbildung unterbricht die dem Lagerungsabschnitt gegenüberliegende Ausnehmung, welche sich dem Schlitz gegenüber des Lagerungsabschnittes anschliesst, den Spannabschnitt. Der Spannabschnitt wird also durch den Schlitz und die Ausnehmung entlang der Mittelachse vollständig unterbrochen. Der Spannabschnitt ist dann ein freies Ende. Mit anderen Worten gesagt ist der Spannabschnitt als Spannlasche ausgebildet, welche sich vom Lagerungsabschnitt weg erstreckt. Besonders bevorzugt ist in dieser Weiterbildung eine Ausnehmung auch im Bereich des Lagerungsabschnittes, wie oben beschrieben, angeordnet.

In einer anderen Weiterbildung erstreckt sich der Schlitz von der Ausnehmung im Bereich des Lagerungsabschnittes gesehen vollständig über die ganze Länge des Spannabschnittes. Der Spannabschnitt bildet dann ebenfalls ein freies Ende, wobei hier nur eine einzige Ausnehmung pro Schlitz angeordnet ist. Mit anderen Worten gesagt verläuft der Schlitz über den Spannabschnitt im Wesentlichen mit einer konstanten lichten Weite im unverpressten Zustand.

Vorzugsweise schliesst sich gegenüber dem besagten Lagerungsabschnitt dem Spannabschnitt ein weiterer Lagerungsabschnitt an. Besonders bevorzugt erstreckt sich dann eine der besagten Ausnehmungen oder der Schlitz durch den weiteren Lagerungsabschnitt hindurch, so dass der weitere Lagerungsabschnitt gemeinsam mit dem Spannabschnitt ein freies Ende bilden, welche vom Lagerungsabschnitt wegstehen. Der weitere Lagerungsabschnitt ist als geschlitzter oder unterbrochener Lagerungsabschnitt ausgebildet.

Der weitere Lagerungsabschnitt kann aber alternativ identisch zum Lagerungsabschnitt mit einem umlaufenden Bereich ausgebildet sein.

Bezüglich der Anordnung des weiteren Lagerungsabschnittes sind die folgenden Ausführungen bevorzugt:
- Spannring umfassend den besagten Lagerungsabschnitt, welchem sich der besagte Spannabschnitt anschliesst, wobei sich dem Spannabschnitt der weitere Lagerungsabschnitt anschliesst, oder
- Spannring umfassend den besagten Lagerungsabschnitt, welchem sich der besagte Spannabschnitt anschliesst, wobei der Spannabschnitt den Abschluss des Spannrings bildet.

Vorzugsweise ist zwischen dem Spannring und dem Anschlussstück eine Rastverbindung bereitgestellt. Hierdurch kann der Spannring einfach am Anschlussstück vormontiert werden.

Besonders bevorzugt ist der besagte weitere Lagerungsabschnitt, welcher durch die Ausnehmung oder den Schlitz entlang der Mittelachse gesehen unterbrochen ausgebildet ist, gegen das Anschlussstück orientiert, wobei der weitere Lagerungsabschnitt über die Rastverbindung mit dem Anschlussstück verbunden wird.

Vorzugsweise weist der Lagerungsabschnitt und/oder der weitere Lagerungsabschnitt für die Rastverbindung mindestens ein Rastelement auf. Das Anschlussstück weist mindestens eine Ausnehmung aufweist, in welche das mindestens eine Rastelement eingreift.

Besonders bevorzugt ist das mindestens eine Rastelement am freien Ende des Lagerungsabschnittes oder des weiteren Lagerungsabschnittes angeordnet. Insbesondere erstreckt sich der mindestens eine Schlitz ggf. über die besagte Ausnehmung in den Bereich des mindestens einen Rastelementes hinein.

Besonders bevorzugt ist der Lagerungsabschnitt mit dem mindestens einen Rastelement durch den mindestens einen Schlitz und/oder die Ausnehmung entlang der Mittelachse gesehen unterbrochen. Folglich ist das Rastelement von der Mittelachse weg und zur Mittelachse hin bewegbar.

Der Lagerungsabschnitt ist vorzugsweise elastisch federnd ausgebildet und wird bei Herstellen der Rastverbindung von der Mittelachse wegbewegt und federt dann in die Rastausnehmung ein.

Vorzugsweise ist die besagte Ausnehmung mit einer Verstärkungsrippe umgeben. Die Verstärkungsrippe umgibt die Ausnehmung vorzugsweise im Wesentlichen vollständig entlang deren Aussenkante im Bereich des Lagerungsabschnittes oder des weiteren Lagerungsabschnittes.

Vorzugsweise ist eine Mehrzahl von Schlitzen, insbesondere drei oder vier Schlitze, vorhanden. Die Schlitze unterteilen den Spannabschnitt in eine Mehrzahl von Spannlaschen, wobei die Schlitze vorzugsweise in gleichmässigen Abständen zueinander über den Umfang des Spannabschnittes verteilt sind. Die Spannlaschen erstrecken sich dabei vom Lagerungsabschnitt in Richtung der Mittelachse weg.

Vorzugsweise sind bezüglich einer sich durch die Mittelachse, welche sich mittig durch das Anschlussstück hindurch erstreckt, hindurch erstreckende Ebene, die mittig durch das Ohr verläuft jeweils zwei Schlitze auf jeder Seite der Ebene angeordnet.

Vorzugsweise liegen die die Schlitze und/oder die Ausnehmungen begrenzenden Wandbereiche in parallelen Ebenen zueinander.

Vorzugsweise erstreckt sich von der innenseitigen zylindrischen Oberfläche des Spannabschnittes mindestens eine um die Mittelachse umlaufende Erhebung. Die Erhebung arbeitet mit einer Funktionsstruktur an der Aussenseite des Anschlussstückes zusammen. Besonders bevorzugt ist die Funktionsstruktur eine umlaufende Rille, in welche die Erhebung im verpressten Zustand das Rohr hineindrückt. In der Rille kann eine Dichtung, wie ein O-Ring, angeordnet sein. Besonders bevorzugt sind zwei Erhebungen und zwei Rillen angeordnet. In der einen Rille ist eine Dichtung platziert und die andere Erhebung stellt eine zylindrische Fläche bereit, wobei das Rohr durch die Erhebung gegen Dichtung und zylindrische Fläche gedrückt wird. Alternativerweise kann die zylindrische Oberfläche des Spannabschnittes aber auch ohne die Erhebungen ausgebildet sein und dann zylindrisch mit konstantem Durchmesser verlaufen.

Vorzugsweise verfügt der Spannring über ein Anschlagselement, welches den Klemmring zum Spannabschnitt bezüglich einer axialen Bewegung festsetzt. Das Anschlagselement ist vorzugsweise eine Übergangskante zwischen Spannabschnitt und Lagerungsabschnitt.

Weiter verfügt der Spannring vorzugsweise über Orientierungselemente, mit welchen der Spannring zum Klemmring derart ausrichtbar ist, dass der mindestens eine Schlitz im ringförmigen Abschnitt und nicht im Bereich des Ohrs zu liegen kommt.

Vorzugsweise weist der Spannring aussenseitig eine winklig geneigt zur Mittelachse orientierte Montagefläche auf, über welche Teile des Spannrings, insbesondere die Spannabschnitt bei der Montage des Klemmrings gegen die Mittelachse bewegbar ist.

Vorzugsweise erstreckt sich der mindestens eine Schlitz im Wesentlichen entlang der Mittelachse des Spannrings. Alternativerweise kann sich der mindestens eine Schlitz abschnittsweise entlang der Mittelachse des Spannrings und abschnittsweise geneigt zur Mittelachse erstrecken, so dass verschränkende Kontur geschaffen wird, oder der Schlitz erstreckt sich mäanderförmig entlang der Mittelachse, so dass verschränkende Kontur geschaffen wird.

Spannring, Klemmring und Anschlussstück sind vorzugsweise separat voneinander ausgebildet, werden aber vorzugsweise werkseitig miteinander zusammengefügt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Rohrklemme nach einer ersten Ausführungsform;
- Fig. 2: eine perspektivische Explosionsdarstellung der Rohrklemme nach Figur 1;
- Fig. 3: eine Schnittdarstellung durch die Mittelachse der Rohrklemme nach den vorhergehenden Figuren;
- Fig. 4: eine Schnittdarstellung quer zur Mittelachse der Rohrklemme nach den vorhergehenden Figuren;
- Fig. 5: eine perspektivische Ansicht des Spannrings der Rohrklemme nach den vorhergehenden Figuren im unverpressten Zustand; und
- Fig. 6: eine perspektivische Ansicht des Spannrings nach Figur 3 im verpressten Zustand.
- Fig. 7: eine perspektivische Ansicht einer Rohrklemme nach einer zweiten Ausführungsform;
- Fig. 8: eine perspektivische Explosionsdarstellung der Rohrklemme nach Figur 7;
- Fig. 9: eine Schnittdarstellung durch die Mittelachse der Rohrklemme nach den vorhergehenden Figuren 7 und 8;
- Fig. 10: eine Schnittdarstellung quer zur Mittelachse der Rohrklemme nach den vorhergehenden Figuren 7 bis 9;
- Fig. 11: eine perspektivische Ansicht des Spannrings der Rohrklemme nach den vorhergehenden Figuren 7 bis 10 im unverpressten Zustand; und
- Fig. 12: eine perspektivische Ansicht des Spannrings nach Figur 11 im verpressten Zustand.

### BESCHREIBUNG BEVORZUGTER AUSFÜHRUNGSFORMEN

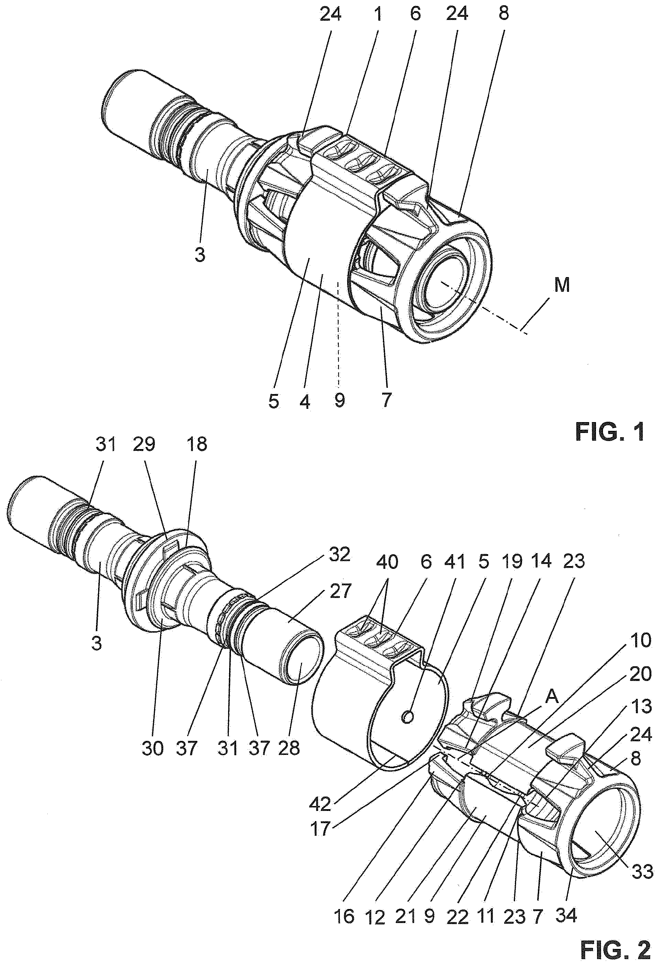

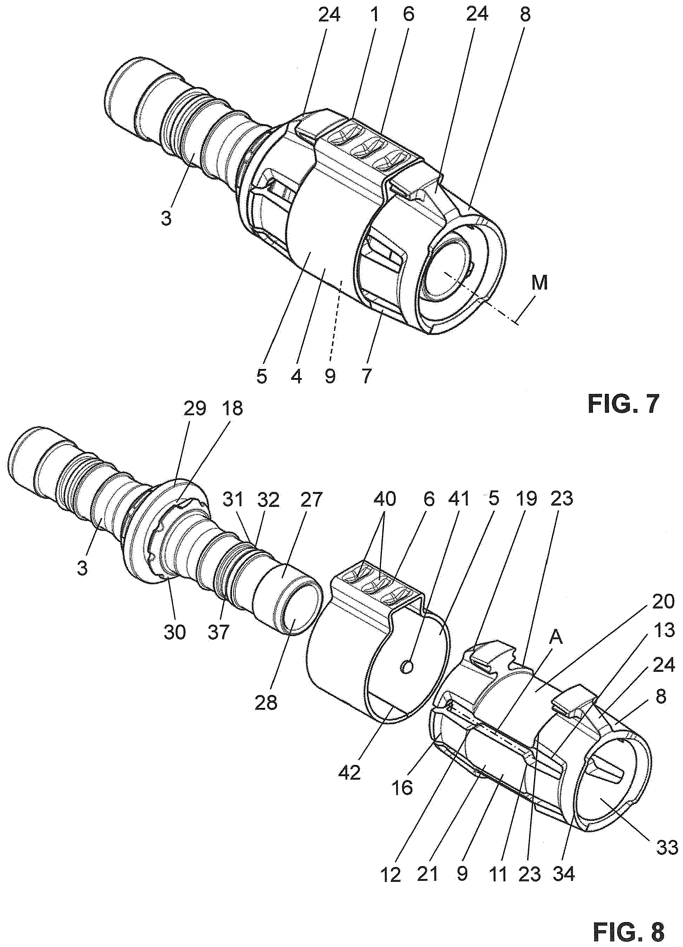

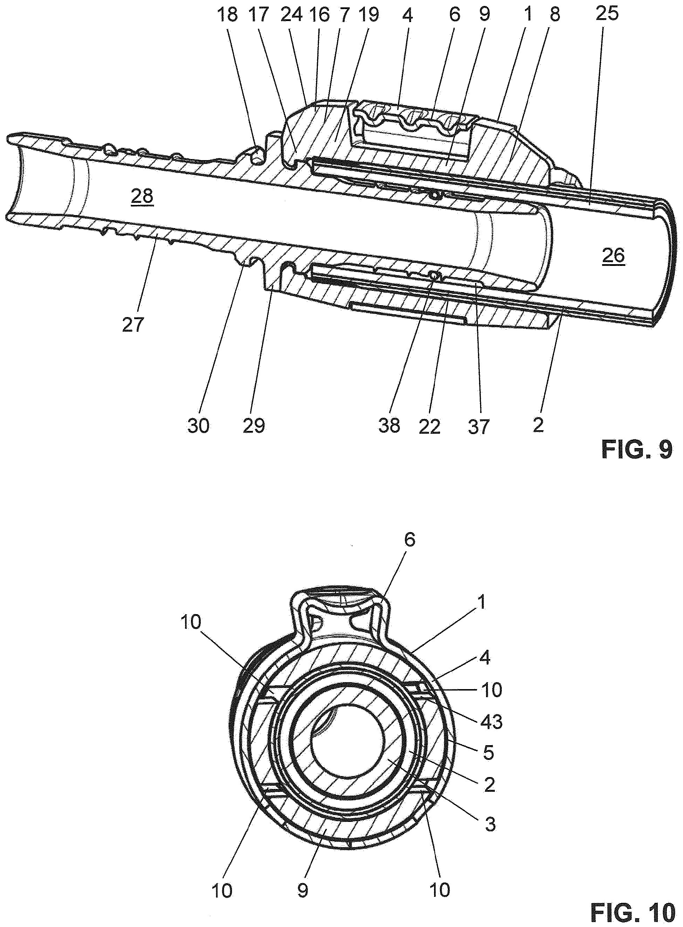

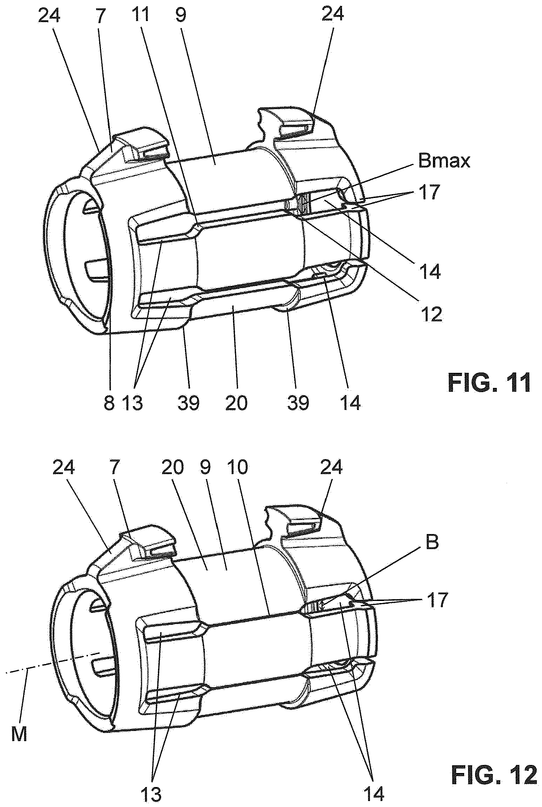

Mit den Figuren 1 bis 6 wird eine erste Ausführungsform einer Rohrklemme gezeigt und mit den Figuren 7 bis 12 wird eine zweite Ausführungsform einer Rohrklemme gezeigt.

In den Figuren 1 und 2 wird eine Rohrklemme 1 zum Verbinden eines Rohrs 2 mit einem in ein Ende des Rohrs 2 einsteckbaren Anschlussstück 3 gemäss einer Ausfuhrungsform gezeigt.

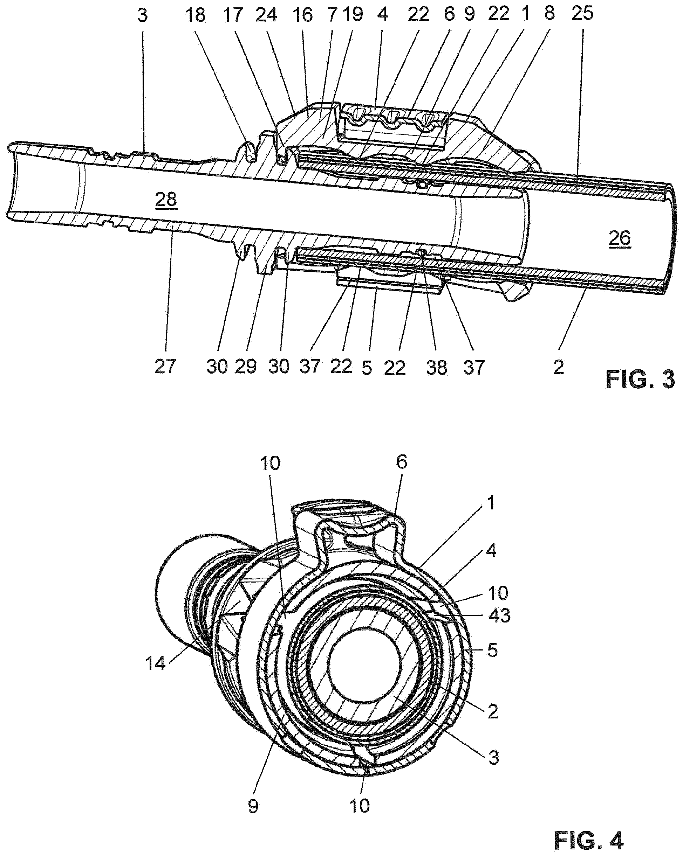

Das Rohr 2 ist im Wesentlichen zylindrisch ausgebildet und erstreckt sich entlang einer Mittelachse M und kann beispielsweise als Wasserleitung dienen. Das Rohr 2 begrenzt mit einer umlaufenden Seitenwand 25 einen Rohrinnenraum 26. Das Rohr 2 ist vorzugsweise ein Verbundrohr, sowie dies in der Figur 3 dargestellt wird. Das Rohr 2 wird mit dem Anschlussstück 3 mit Hilfe der Rohrklemme 1 verbunden.

Das Anschlussstück 3, welches mit dem Rohr 2 verbunden werden soll, ist im Wesentlichen zylindrisch ausgebildet und erstreckt sich entlang einer Mittelachse M. Das Anschlussstück 3 begrenzt mit einer umlaufenden Seitenwand 27 einen Hohlraum 28. Im verbunden Zustand mündet der Rohrinnenraum 26 in den Hohlraum 28. Das Anschlussstück 3 weist weiterhin einen Flansch 29 auf, welcher sich von der Seitenwand 27 bezüglich des Hohlraums 18 nach aussen erstreckt. Im Bereich des Flansches 19 ist eine umlaufende Ausnehmung oder Rille 18 angeordnet. Die Rille 18 wird hier vom Flansch 19 und von einer umlaufenden Erhebung 30, die beabstandet zum Flansch 29 angeordnet ist, begrenzt. Weiter umfasst das Anschlussstück 3 einen Lagerungsbereich 31, mit welchem das Anschlussstück 3 in den Rohrinnenraum 26 einragt. In diesem Lagerungsbereich 31 wird durch die Rohrklemme 1 eine entsprechende Kraft vom Rohr 2 auf das Anschlussstück 3 übertragen. Der Lagerungsbereich 31 ist im Wesentlichen zylindrisch ausgebildet und kann optional eine Funktionsstruktur 32 umfassen. In der vorliegenden Ausführungsform weist die Funktionsstruktur 32 verschiedene Rillen auf, welche die Dichtigkeit zwischen dem Anschlussstück 3 und dem Rohr 2 verbessert. Die Funktionsstruktur 32 kann alternativ oder zusätzlich als Rückhaltestruktur ausgebildet sein.

Das Rohr 2 und das Anschlussstück 3 werden mit einer Rohrklemme 1 miteinander verbunden. Dabei ragt das Anschlussstück 3 mit dem Lagerungsbereich 31 in den Rohrinnenraum 26 ein und erstreckt sich soweit in den Rohrinnenraum 26 ein, dass der Lagerungsabschnitt 22 in den Wirkungsbereich der Rohrklemme 1 zu liegen kommt. Die Rohrklemme 1 kann dann gemäss der untenstehenden Beschreibung verpresst werden und bringt dabei eine Klemmkraft auf das Rohr 2 und das Anschlussstück 3 auf, sodass das Rohr 2 zum Anschlussstück 3 geklemmt wird. Der maximale Aussendurchmesser des Lagerungsbereiches 31 ist etwas kleiner oder gleich dem Aussendurchmessers des Rohrs 2 gewählt.

Die Rohrklemme 1 selbst umfasst einen Klemmring 4 und einen durch den Klemmring 4 zusammenpressbaren Spannring 7. Die Rohrklemme 1 umgibt mit dem Klemmring 4 sowie dem Spannring 7 das Rohr 2. Der Spannring 7 wird durch den Klemmring 4 umgeben.

Der Klemmring 4, welcher in der Figur 2 gut erkannt werden kann, weist einen sich entlang seines Umfangs erstreckenden ringförmigen Abschnitt 5 und ein sich von diesem Abschnitt 5 radial nach aussen erstreckendes Ohr 6 auf. Das Ohr 6 ist mit einem Werkzeug zusammenpressbar, wobei sich der Durchmesser des ringförmigen Abschnittes 5 verringert, sodass eine Klemmkraft in radialer Richtung zur Mittelachse M auf das Rohr 2 im Lagerungsbereich 31 bereitgestellt werden kann.

Der Spannring 7, welcher in der Figur 2 perspektivisch dargestellt ist, ragt mit einem Spannabschnitt 9 mindestens teilweise in den ringförmigen Abschnitt 5 des Klemmrings 4 ein. Der Spannabschnitt 9 ist im Wesentlichen zylindrisch ausgebildet und weist entlang der Mittelachse M gesehen eine im Wesentlichen gleiche Ausdehnung auf, wie der ringförmige Abschnitt 5. Mit anderen Worten gesagt ragt der Spannabschnitt 9 im Wesentlichen vollständig in den ringförmigen Abschnitt 5 ein. Alternativ kann der Spannabschnitt 9 aber auch so ausgebildet sein, dass dieser durch den ringförmigen Abschnitt 5 hindurch ragt, sodass der Spannabschnitt 9 bezüglich des ringförmigen Abschnittes 5 und der Mittelachse sich auf beiden Seiten aus dem ringförmigen Abschnitt 5 heraus erstreckt.

Der Spannring 7 weist weiter einen Lagerungsabschnitt 8 auf, welcher sich dem Spannabschnitt 9 anschliesst. Der Lagerungsabschnitt 8 steht dabei einstückig mit dem Spannabschnitt 9 in Verbindung. Lagerungsabschnitt 8 und Spannabschnitt 9 definieren einen zylindrischen Innenraum 33, welcher das Rohr 2 aufnehmen kann. Der Spannabschnitt 9 liegt zwischen dem ringförmigen Abschnitt 5 des Klemmrings 4 und dem Rohr 2, sowie dies in der Figur 1 und den Figuren 3 und 4 gut erkannt werden kann. Der Spannabschnitt 9 beziehungsweise der Spannring 7 ist mit dem Innenraum 33 so ausgebildet, dass das Rohr 2 im Wesentlichen vollständig umgeben wird.
Der Spannabschnitt 8 verfügt über mindestens einen Schlitz 10, welcher die Wandung des Spannabschnittes 9 von aussen zum Innenraum 33 hin durchbricht. In der vorliegenden Ausführungsform sind drei Schlitze 10 angeordnet. Wenn nur der Klemmring 4 über das Rohr 6 zusammengepresst wird, wird eine Kraft vom Spannring auf den Spannabschnitt 9 des Spannrings 7 übertragen. Dabei wird der Spannabschnitt 9 entsprechend gegen das Rohr 2 gedrückt, wobei die lichte Weite des Schlitzes 10 während des Vorgangs des Verpressens mit zunehmender Kraft bzw. Verformung des Ohrs 6 verkleinert wird. Die lichte Weite des Schlitzes 10 ist dabei so gewählt, dass diese im Zusammengepressten Zustand annähernd oder ganz aufgehoben wird. Das heisst, dass die lichte Weite des Schlitzes 10 bei Erreichen einer vorbestimmten Verpresskraft annähernd oder ganz aufgehoben wird. Folglich werden die beiden Seiten des Spannabschnittes im Bereich der Schlitze 10 auf Block gefahren und der Schlitz 10 wird im zusammengepressten Zustand nahezu, insbesondere vollständig, aufgehoben. Dies hat den Vorteil, dass der Spannabschnitt 9 das Rohr 2 um dessen Umfang im Bereich der Klemmung vollständig umgibt, wodurch eine unerwünschte Verformung des Rohres 2 vermieden wird. Zudem kann, falls das Rohr 2 mit einer Kunststoffbeschichtung versehen ist, ein Fliessen des Kunststoffes in allfällige Lücken der Rohrklemme 1, insbesondere in den Bereich des Ohrs 6 vermieden werden.
Weiter umfasst der Spannring 7 im Bereich des Schlitzes 10 mindestens eine Ausnehmung 13, 14. Die Ausnehmung 13, 14 weist mindestens abschnittsweise einen grösseren Querschnitt auf als der Schlitz 10. Der Schlitz 10 mündet in die besagte mindestens eine Ausnehmung 13, 14. Mit anderen Worten schliesst sich die mindestens eine Ausnehmung 13, 14 in einem Endbereich 11, 12 dem Schlitz 10 an.

In der vorliegenden Ausführungsform sind zwei Ausnehmungen 13, 14 angeordnet. Jedem Endbereich 11 und 12 des Schlitzes 10 schliesst sich somit eine Ausnehmung 13, 14 an.

Die lichte Weite der mindestens einen Ausnehmung 13, 14 verkleinert sich beim Verpressen des Ohrs 6 ebenfalls. Die Anordnung der mindestens einen Ausnehmung 13, 14 hat den Vorteil, dass das Material des Spannrings 7 beim Vorgang des Verpressens des Klemmrings 4 weniger belastet wird, weil durch die Ausnehmung 13, 14 in benachbarten Bereichen des Spannrings 7 eine elastisch federnde Verformung des Materials des Spannrings 7 zugelassen wird. Insbesondere wird ein Abscheren des Spannabschnittes 9 vom Lagerungsabschnitt 8, was zwangsläufig zu hohen Spannungsspitzen im Material führt, verhindert.

Die Ausnehmung 13, 14 kann, wie dann die nachfolgende Beschreibung zeigt, verschiedenartig angeordnet und ausgebildet werden.

In der vorliegenden gezeigten Ausführungsform erstreckt sich die Ausnehmung 13 vom Spannabschnitt 9 in den Lagerungsabschnitt 8 hinein. Die Ausnehmung 13 schliesst sich dabei unmittelbar am Spannabschnitt 9 an. Die Ausnehmung 13 verlängert dabei einen durch den Schlitz 10 bereitgestellten Durchbruch vom Spannabschnitt 9 bis in den Lagerungsabschnitt 8 hinein. Eine zweite Ausnehmung 14 ist gegenüber der Ausnehmung 13 angeordnet. Die zweite Ausnehmung 14 ist hier in einem weiteren Lagerungsabschnitt 16 angeordnet, welcher bezüglich des Spannabschnittes 9 gegenüber dem Lagerungsabschnitt 8 liegt.

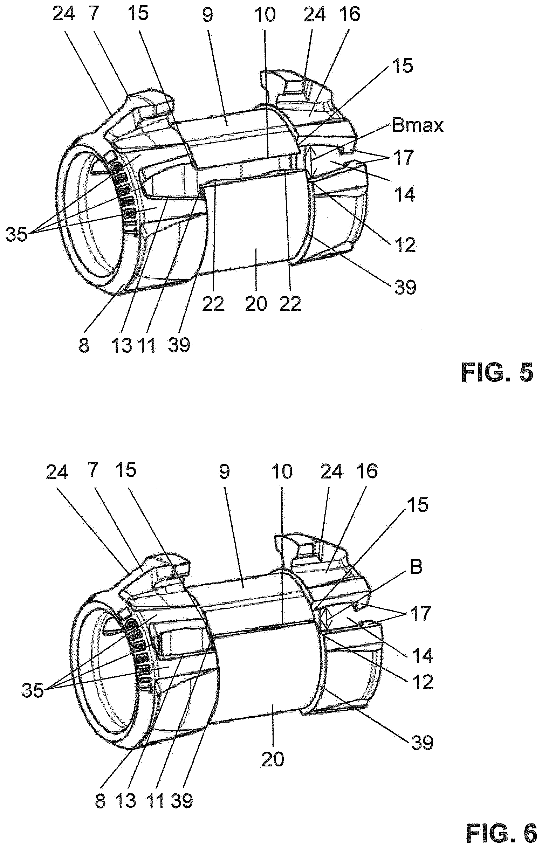

Die lichte Weite der besagten mindestens einen Ausnehmung 13, 14 im zusammengepressten Zustand wird vorzugsweise nicht vollständig aufgehoben. Durch diese Ausbildung können die Spannungsspitzen im Material weiter reduziert werden. In der Figur 5 wird der Spannring 7 im unverformten Zustand gezeigt. Hier kann gut erkannt werden, dass der Schlitz 10 noch offen, also vor der Verpressung, ist. In der Figur 6 wird sodann der Spannring 7 im verpressten Zustand gezeigt. Die lichte Weite des Schlitzes 10 des Klemmrings 4 ist dabei annähernd oder ganz aufgehoben. Die lichte Weite der besagten Ausnehmung 13, 14 hingegen ist nicht aufgehoben, sondern besteht weiterhin.

Mit anderen Worten gesagt ist die lichte Weite der besagten Ausnehmung 13, 14 mindestens abschnittsweise grösser als die lichte Weite des Schlitzes 10. Dies bei einer Betrachtung von rechtwinklig zur Mittelachse M.

In der gezeigten Ausführungsform weist die mindestens eine Ausnehmung 13, 14 im unverpressten Zustand in unmittelbarer Nähe zum Schlitz 10 eine lichte Weite mit einer maximalen Breite bzw. einem maximalen Querschnitt auf. Diese Breite ist in den Figuren mit dem Bezugszeichen Bmax angegeben. Die Breite definiert sich als Abstand zwischen den die Ausnehmung begrenzenden Wänden bei einer Betrachtung quer zur Mittelachse M. Die lichte Weite wird mit zunehmendem Abstand vom Schlitz 10 kleiner.

Vorzugsweise ist die Breite der lichten Weite der Ausnehmung 13, 14 über die gesamte Länge der Ausnehmung grösser als die Breite der lichten Weite des Schlitzes 10.
Im zusammengepressten Zustand in der Figur 6 wird gezeigt, dass die lichte Weite der Ausnehmung 13, 14 kleiner wurde. Besonders bevorzugt ist im verpressten Zustand die lichte Weite über die Länge der Ausnehmung 13, 14 entlang der Mittelachse M gesehen im Wesentlichen konstant.
Die Ausnehmung 13, 14 hat in der bevorzugten Ausführungsform, wie in der Figur 5 gezeigt, im unverpressten Zustand quer zur Mittelachse M gesehen die Form eines Trapezes. Der Schlitz 10 mündet hier über die längere der beiden Parallelseiten 15 des Trapezes in das Trapez. Die beiden parallel verlaufenden Seiten 15 des Trapezes stehen dabei quer zur Mittelachse M. Alternativ kann die Ausnehmung auch die Form einer Ellipse oder eines Rechteckes aufweisen oder rund, dreieckig oder pilzförmig ausgebildet sein.
Die mindestens eine Ausnehmung 13, 14, schliesst sich, wie bereits oben erwähnt, direkt dem Spannabschnitt 9 des Spannrings 7 an. Die Ausnehmung 13, 14 ist dabei derart angeordnet, dass diese nicht durch den Klemmring 4 überdeckt wird. Die Ausnehmung 13, 14 liegt benachbart oder beabstandet zum Klemmring 4. In der vorliegenden Ausführungsform ist die mindestens eine Ausnehmung 13, 14 direkt an den Spannring 7 angrenzend positioniert.

Wie der Schlitz 10 durchdringt die mindestens eine Ausnehmung 13, 14 die Wandung des Spannrings 7 von aussen zum Innenraum 33. Die mindestens eine Ausnehmung ist also eine Öffnung der Wandung des Spannrings 7.

Anhand der Figuren 2, 5 und 6 werden nun verschiedene Varianten des Spannrings 7 erläutert.

In einer ersten, in den Figuren gezeigten Variante, umfasst der Spannring 7 entlang der Mittelachse M gesehen den besagten Lagerungsabschnitt 8, dem sich der besagte Spannabschnitt 9 anschliesst. Gegenüber des Lagerungsabschnittes 8 schliesst sich dem Spannabschnitt 9 ein weiterer Lagerungsabschnitt 16 an. Der Schlitz 10 erstreckt sich vollständig durch den Spannabschnitt 9 hindurch. Der Schlitz 10 erstreckt sich über die Länge des Spannabschnittes 9 zwischen dem Lagerungsabschnitt 8 und dem weiteren Lagerungsabschnitt 16. Eine erste Ausnehmung 13 erstreckt vom Schlitz 10 und vom Spannabschnitt 9 in den Lagerungsabschnitt 8 hinein. Die Ausnehmung 13 durchdringt aber den Lagerungsabschnitt 8 in Richtung der Mittelachse M gesehen nicht vollständig, sodass der Lagerungsabschnitt 8 bereichsweise vollständig um die Mittelachse M umlaufend ausgebildet ist. Dieser vollständige umlaufende Bereich trägt das Bezugszeichen 34. Gegenüber des Lagerungsabschnittes 8 schliesst sich dem Schlitz 10 und dem Spannabschnitt 9 eine zweite Ausnehmung 14 an, welche sich in den weiteren Lagerungsabschnitt 16 hineinerstreckt. Die zweite Ausnehmung 14 ist hier so ausgebildet, dass sich diese in Richtung der Mittelachse M gesehen vollständig durch den Lagerungsabschnitt 16 hindurch erstreckt. Der Lagerungsabschnitt 16 ist somit als geschlitzter Lagerungsabschnitt ausgebildet. Mit anderen Worten gesagt bilden die zwei Ausnehmungen 13, 14 und der Schlitz 10 gesehen vom umlaufenden Bereich 34 des Lagerungsabschnittes 8 eine Lasche mit einem freien Ende 19. Das freie Ende 19 kann dabei relativ zum feststehenden umlaufenden Bereich 34 zur Mittelachse M oder von Mittelachse M bewegt werden.

Die Anordnung von zwei Ausnehmungen 13, 14 auf beiden Seiten des Schlitzes 10 in jeweils dem Spannabschnitt angrenzenden Lagerungsabschnitt 8 hat sich als vorteilhaft erwiesen, weil der Lagerungsabschnitt 8 sich beim Verpressvorgang im Wesentlichen parallel zum Rohr hinbewegt. Dies führt zu einer gleichmässigeren Kraftverteilung.

In einer zweiten auf der ersten Variante basierenden, hier aber nicht gezeigten Variante, ist die zweite Ausnehmung 14 im weiteren Lagerungsabschnitt 16 als nicht den weiteren Lagerungsabschnitt 16 vollständig durchdringende Ausnehmung ausgebildet. Der weitere Lagerungsabschnitt 16 weist dann in Analogie zum Lagerungsabschnitt 8 der ersten Ausführungsform einen umlaufenden Bereich auf. Der weitere Lagerungsabschnitt 16 ist dann im Wesentlichen identisch zum Lagerungsabschnitt 8 ausgebildet. Der Spannabschnitt 9 in dieser Variante ist identisch zum Spannabschnitt 9 der ersten Variante ausgebildet.

In einer dritten Variante umfasst der Spannring 7 den Lagerungsabschnitt 8 und den sich dem Lagerungsabschnitt 8 anschliessenden Spannabschnitt 9. Der Spannabschnitt 9 bildet gegenüber dem Lagerungsabschnitt 8 den Abschluss des Spannrings in Richtung der Mittelachse M gesehen. Ein weiterer Lagerungsabschnitt ist nicht vorgesehen. In Richtung der Mittelachse M gesehen besteht der Spannring 7 dann also ausschliesslich aus dem Lagerungsabschnitt 8 und dem Spannabschnitt 9. Durch den Spannabschnitt 9 erstreckt sich, wie oben beschrieben, der Schlitz 10. Dem Schlitz 10 schliesst sich dann eine Ausnehmung 13 an, welche bevorzugt ebenfalls im Lagerungsabschnitt 8, wie bereits oben erläutert, angeordnet ist. Der Spannabschnitt 9 ist dabei vorzugsweise als freies Ende ausgebildet.

Bei allen hierin beschriebenen Varianten wird zwischen dem Spannring 7 und dem Anschlussstück 3 vorzugsweise eine Rastverbindung bereitgestellt. Der Spannring 7 ist dabei am Anschlussstück 3 einrastbar. Die Rastverbindung kann je nach Ausbildung des Spannrings 7 verschiedenartig ausgebildet sein.

In der gezeigten Variante ist am weiteren Lagerungsabschnitt 16 mindestens ein Rastelement 17 angeordnet. Das Rastelement 17 greift in die Ausnehmung 18 am Anschlussstück 3 ein. Die Ausnehmung 18 wird, wie bereits oben beschrieben durch den Flansch 29 und die Erhebung 30 gebildet. Das Rastelement 17 ist vorzugsweise so ausgebildet, dass es sich vollständig um den Umfang mit Ausnahme im Bereich der Ausnehmung 13, 14 herum erstreckt. Das Rastelement kann aber auch abschnittsweise unterbrochen ausgebildet sein. In der gezeigten Variante ist der Spannring 7 derart zum Anschlussstück 3 orientiert, dass der weitere Lagerungsabschnitt 16 mit der zweiten Ausnehmung zum Flansch 29 hin orientiert ist. Der Lagerungsabschnitt 8 mit der ersten Ausnehmung ist zum Rohr hin orientiert.

In einer anderen Weiterbildung, insbesondere in der dritten Variante, bei welcher der weitere Lagerungsabschnitt 8 nicht angeordnet ist, umfasst der Lagerungsabschnitt 8 entsprechende Rastelemente 17. Hierbei wird die Rastverbindung mit dem Lagerungsabschnitt 8 und der Ausnehmung 18 bereitgestellt. Aufgrund des umlaufenden Bereichs 34 muss die Rastverbindung hier etwas anders dimensioniert sein beziehungsweise es sind grössere Kräfte bei der Montage des Spannrings 7 auf das Anschlussstück 3 nötig.

In allen Varianten des Spannrings 7 ist es besonders bevorzugt, wenn die Ausnehmung 13, 14 mit einer Verstärkungsrippe 35 umgeben ist. Die Verstärkungsrippe 35 ist vorzugsweise derart ausgebildet, dass deren Steifigkeit mit zunehmendem Abstand von Spannabschnitt 9 weg grösser wird. Die Verstärkungsrippe erstreckt sich dabei ausgehend vom Spannabschnitt 9 entlang der Mittelachse M in unmittelbarer Nachbarschaft zur Ausnehmung 13, 14. Im Bereich des Lagerungsabschnittes 8 mit dem umlaufenden Bereich 34 weist die Verstärkungsrippe zudem einen sich quer zur Mittelachse M erstreckenden Abschnitt auf.

Der Spannring 7 weist in allen Varianten bevorzugt eine Mehrzahl von Schlitzen 10 auf. In den gezeigten Varianten sind drei Schlitze in regelmässigen Abständen zueinander angeordnet. Es ist aber auch denkbar zwei, vier, fünf oder sechs Schlitze 10 anzuordnen. Die Schlitze 10 unterteilen den Spannabschnitt 9 in eine Mehrzahl von Spannlaschen 20. Diesbezüglich kann gesagt werden, dass sich die Spannlaschen 20 vom umlaufenden Bereich 34 weg erstrecken.

Aussenseitig ist der Spannabschnitt 9 in allen Varianten bevorzugt im Wesentlichen zylindrisch ausgebildet. Der Spannabschnitt 9 weist also aussenseitig eine im Wesentlichen zylindrische Oberfläche auf. Innenseitig ist der Spannabschnitt 9 ebenfalls vorzugsweise zylindrisch ausgebildet. Von der Figur 3 kann erkannt werden, dass der Spannabschnitt 9 gemäss einer besonders bevorzugten Ausführung mehrere sich von einer zylindrischen Oberfläche 21 erhebende Erhebungen 22 aufweist. Diese Erhebungen 22 sind umlaufend um die Mittelachse M ausgebildet. Die Erhebungen 22 arbeiten dabei mit Rillen 37 eines Dichtabschnittes, welcher Teil der besagten Funktionsstruktur 32 ist, zusammen. Pro Erhebung 22 ist eine Rille 37 angeordnet, wobei im zusammengepressten Zustand die Erhebung 22 das Rohr 2 in die Rille 37 hineindrückt. In der einen Rille 37 ist O-Ring Dichtung 38 angeordnet. In der anderen Rille 37 ist kein zusätzliches Dichtelement angeordnet. Hier wird das Rohr 2 gegen eine zylindrische Fläche gedrückt. Die Anordnung von zwei Erhebungen hat sich als Vorteilhaft erwiesen, es ist aber auch denkbar, dass nur eine Erhebung 22 oder mehr als zwei Erhebungen 22 angeordnet sind.

Weiter verfügt der Spannring 7 in allen Varianten bevorzugt über ein Anschlagselement 23, welches den Klemmring 4 zum Spannabschnitt 9 bezüglich einer axialen Bewegung festsetzt. In der vorliegenden Variante ist das Anschlagselement 23 durch eine Übergangskante 39 zwischen dem Spannabschnitt 9 und dem Lagerungsabschnitt 8 bzw. zwischen dem Spannabschnitt 9 und dem weiteren Lagerungsabschnitt 16 bereitgestellt. Der Durchmesser erhöht sich dann im Bereich der Übergangskante vom Durchmesser des Spannabschnittes 9 auf den Durchmesser des Lagerungsabschnittes 8, 16. Der Spannring 7 steht an der Übergangskante 39 an und wird bezüglich einer Bewegung in Richtung der Mittelachse relativ zum Spannring 7 festgesetzt.

Weiter kann der Spannring 7 auch über Orientierungselemente verfügen, mit welchem der Spannring 7 zum Klemmring 4 derart ausrichtbar ist, dass der mindestens eine Schlitz 10 im ringförmigen Abschnitt 5 und nicht im Bereich des Ohrs 6 zu liegen kommt.

Vorzugsweise verfügt der Spannring 7 in allen Varianten aussenseitig über eine winklig geneigt zur Mittelachse M orientierte Montagefläche 24. Die Montagefläche 24 kann sowohl im Lagerungsabschnitt 8 als auch im weiteren Lagerungsabschnitt 16 angeordnet sein. Besonders bevorzugt ist die Montagefläche 24, wie hier gezeigt, im Bereich des freien Endes 19 angeordnet. Die Montagefläche 24 hilft bei der Montage des Klemmrings 5 am Spannring 7. Die Funktion kann in der Figur 2 erkannt werden. Wird ausgehend von der in Figur 2 gezeigten Lage der Klemmring 5 in Richtung des Spannrings 7 verschoben, so kommt das Klemmohr 6 in Kontakt mit der Montagefläche 24. Aufgrund der winkligen Ausbildung zur Mittelachse M und der Bewegung zwischen Klemmring 5 und Spannring 7 wird der Spannabschnitt 8 gegen die Mittelachse bewegt. Hierdurch kann der Klemmring 5 weiter relativ zum feststehenden Spannring 7 geschoben werden, bis er in den Bereich des Spannabschnittes 9 zu liegen kommt. Sobald der Klemmring 5 mit dem Spannring 7 verbunden ist, kann diese Einheit mit dem Anschlussstück 3 verbunden werden. Über die Rastverbindung wird dann die Einheit bestehend aus Klemmring 5 und Spannring 7 am Anschlussstück 3 festgesetzt und die Rohrklemme kann als ein Teil bereitgestellt werden.

Der Klemmring 4 weist hier im Bereich des Klemmohrs 6 mehrere Verstärkungssicken 40 auf. Weiter weist der Klemmring zwei Bohrungen 41 auf, welche den Herstellprozess des Klemmrings 4 bei dessen Verschweissung an der Schweisskante 42 vereinfacht. Der Klemmring 4 kann aber auch anders hergestellt sein.

Bei einer anderen Ausführungsform einer Rohrklemme 1 kann auf die Anordnung der besagten Ausnehmungen verzichtet werden. Ansonsten ist die Rohrklemme 1 gemäss den oben beschriebenen Ausführungsformen ausgebildet, weshalb auf die obige Beschreibung verwiesen wird. Bei dieser Ausführungsform ist die Rohrklemme aber ebenfalls mit Mitteln versehen, welche die Materialbelastung des Spannrings reduzieren. Zwischen dem Spannring 7 und dem Anschlussstück wird eine Rastverbindung bereitgestellt. Mindestens ein Schlitz 10 erstreckt sich dabei in den Bereich des mindestens einen Rastelementes 17 hinein, so dass der Spannring 7 in diesem Bereich mit einer grösseren Flexibilität ausgebildet ist.

Die Schlitze 10 und auch die Ausnehmungen 13, 14 sind durch Wandbereiche 43 begrenzt. Die Wandbereiche 43 sind Teil des Spannrings 7. Die Wandbereiche 43 sind vorzugsweise derart zueinander orientiert, dass sie in parallelen Ebenen zueinander liegen. Dies hat bei der Herstellung des Spannrings 7 mittels eines Spritzgiesswerkzeuges Vorteile bei der Entformung.

In den Figuren 7 bis 12 wird eine zweite Ausführungsform der Rohrklemme 1 gezeigt. Gleiche Teile sind mit gleichen Bezugszeichen versehen und es wird im Wesentlichen auf die Beschreibung der ersten Ausführungsform verwiesen. Im Unterschied zur ersten Ausführungsform sind die sich dem Schlitz 10 anschliessenden Ausnehmungen 13, 14 etwas anders ausgebildet. In der ersten Ausführungsform nach den Figuren 1 bis 6 sind Ausnehmungen 13, 14 bezüglich einer mittig durch den Schlitz 10 verlaufenden Symmetrieachse symmetrisch ausgebildet. In der zweiten Ausführungsform nach den Figuren 7 bis 12 sind die Ausnehmungen 13, 14 bezüglich einer mittig durch den Schlitz 10 verlaufenden Symmetrieachse asymmetrisch ausgebildet.

Weiter sind in der zweiten Ausführungsform vier Schlitze 10 vorhanden. Es sind jeweils zwei Schlitze 10 bezüglich einer sich durch die Mittelachse M hindurch erstreckende Ebene, die zudem mittig durch das Ohr 9 auf jeder Seite der Ebene angeordnet.

Das Anschlussstück und die Spannhülse sind vorzugsweise aus Kunststoff hergestellt. Der Klemmring ist vorzugsweise aus einem metallischen Werkstoff.

**BEZUGSZEICHENLISTE**

| | | | |
|---|---|---|---|
| 1 | Rohrklemme | 27 | Seitenwand |
| 2 | Rohr | 28 | Hohlraum |
| 3 | Anschlussstück | 29 | Flansch |
| 4 | Klemmring | 30 | Erhebung |
| 5 | ringförmigen Abschnitt | 31 | Lagerungsbereich |
| 6 | Ohr | 32 | Funktionsstruktur |
| 7 | Spannring | 33 | Innenraum |
| 8 | Lagerungsabschnitt | 34 | umlaufender Bereich |
| 9 | Spannabschnitt | 35 | Verstärkungsrippe |
| 10 | Schlitz | 37 | Rille |
| 11 | erster Endbereich | 38 | O-Ring |
| 12 | zweiter Endbereich | 39 | Übergangskante |
| 13 | erste Ausnehmung | 40 | Verstärkungssicke |
| 14 | zweite Ausnehmung | 41 | Bohrung |
| 15 | längere Parallelseite | 42 | Schweisskante |
| 16 | weiterer Lagerungsabschnitt | 43 | Wandbereiche |
| 17 | Rastelement | Bmax | maximale Breite |
| 18 | Rastausnehmung | A | Symmetrieachse |
| 19 | freies Ende | | |
| 20 | Spannlaschen | | |
| 21 | zylindrische Oberfläche | | |
| 22 | Erhebung | | |
| 23 | Anschlagselement | | |
| 24 | Montagefläche | | |
| 25 | Seitenwand | | |
| 26 | Rohrinnenraum | | |

## Patentansprüche

1. Rohrklemme (1) zum Verbinden eines Rohres (2) umfassend
ein in ein Ende des Rohres (2) einsteckbares Anschlussstück (3),
einen Klemmring (4), der entlang seines Umfanges einen ringförmigen Abschnitt (5) und ein sich radial nach aussen erstreckendes Ohr (6) aufweist, das von einem Werkzeug zusammenpressbar ist, und
ein durch den Klemmring (4) zusammenpressbarer Spannring (7),
wobei der Spannring (7) einen Lagerungsabschnitt (8) und einen sich dem Lagerungsabschnitt (8) anschliessenden Spannabschnitt (9) umfasst,
welcher Spannabschnitt (9) mindestens teilweise in den ringförmigen Abschnitt (5) des Klemmrings (4) einragt, und das Rohr (2) im Wesentlichen vollständig umgibt,
wobei der Spannabschnitt (9) über mindestens einen Schlitz (10) verfügt, dessen lichte Weite im zusammengepressten Zustand des Klemmrings (4) annähernd oder ganz aufhebbar ist, wobei
der Spannring (7) mindestens eine Ausnehmung (13, 14) umfasst, welche sich mindestens in einem Endbereich (11, 12) des Schlitzes (10) dem Schlitz anschliesst, wobei die lichte Weite der mindestens einen Ausnehmung (13, 14) sich beim Zusammenpressen verkleinert, **dadurch gekennzeichnet, dass** die lichte Weite der Ausnehmung (13, 14) benachbart zum Schlitz (10) eine maximale Breite aufweist und dass die lichte Weite mit zunehmenden Abstand zum Schlitz (10) kleiner wird.

2. Rohrklemme (1) nach Anspruch 1, **dadurch gekennzeichnet, dass** die lichte Weite der besagten Ausnehmung (13, 14) im zusammengepressten Zustand nicht vollständig aufgehoben wird; und/oder dass die lichte Weite der Ausnehmung (13, 14) quer zu einer sich mittig durch das Anschlussstück (3) hindurcherstreckende Mittelachse (M) gesehen im unverpressten und insbesondere auch im zusammengepressten Zustand grösser ist als die lichte Weite des Schlitzes (10) quer zur Mittelachse (M) gesehen.

3. Rohrklemme (1) nach einem der vorhergehenden Ansprüche, **dadurch gekennzeichnet,**
**dass** die Ausnehmung (13, 14) bezüglich einer mittig sich durch den Schlitz (10) erstreckenden Symmetrieachse (A) symmetrisch oder asymmetrisch ist; und/oder
**dass** die Ausnehmung (13, 14) im nicht-zusammengepressten Zustand quer zur Mittelachse (M) gesehen die Form eines Trapez hat, wobei der Schlitz (10) vorzugsweise über die längere der beiden Parallelseiten (15) des Trapezes in das Trapez mündet; und/oder
**dass** die mindestens eine Ausnehmung (13, 14) derart am Spannring (7) positioniert ist, dass die Ausnehmung (13, 14) nicht durch den Klemmring (4) überdeckt ist; und/oder
**dass** sich die Ausnehmung (13, 14) vom Spannabschnitt (9) gesehen in den Lagerungsabschnitt (8) hinein erstreckt, wobei der Lagerungsabschnitt (8) bereichsweise vollständig um die Mittelachse (M) umlaufend ausgebildet ist.

4. Rohrklemme (1) nach einem der vorhergehenden Ansprüche, **dadurch gekennzeichnet, dass** sich dem Schlitz (10) beidseitig eine Ausnehmung (13, 14) anschliesst und/oder dass pro Schlitz (10) mindestens eine Ausnehmung (13, 14) angeordnet ist.

5. Rohrklemme (1) nach einem der vorhergehenden Ansprüche, **dadurch gekennzeichnet, dass** die dem Lagerungsabschnitt (8) gegenüberliegende Ausnehmung (14), welche sich dem Schlitz (10) anschliesst, den Spannabschnitt (9) unterbricht, wobei der Spannabschnitt (9) ein freies Ende ist, oder dass sich der Schlitz (10) von der Ausnehmung (14) im Bereich des Lagerungsabschnittes (8) gesehen vollständig über die ganze Länge des Spannabschnittes (9) erstreckt, wobei der Spannabschnitt (9) ein freies Ende (19) ist.

6. Rohrklemme (1) nach einem der vorhergehenden Ansprüche, **dadurch gekennzeichnet, dass** sich gegenüber des besagten Lagerungsabschnittes (8) dem Spannabschnitt (9) ein weiterer Lagerungsabschnitt (16) anschliesst, wobei sich eine der besagten Ausnehmungen oder der Schlitz durch den weiteren Lagerungsabschnitt (16) in Richtung der Mittelachse (M) hindurch erstreckt, so dass der weitere Lagerungsabschnitt (8) gemeinsam mit dem Spannabschnitt (9) ein freies Ende bildet.

7. Rohrklemme (1) nach einem der vorhergehenden Ansprüche, **dadurch gekennzeichnet, dass** die Ausnehmung (13, 14) mit einer Verstärkungsrippe (35) umgeben ist.

8. Rohrklemme (1) nach einem der vorhergehenden Ansprüche, **dadurch gekennzeichnet, dass** zwischen dem Spannring (7) und dem Anschlussstück (3) eine Rastverbindung bereitgestellt ist.

9. Rohrklemme (1) nach Anspruch 8, **dadurch gekennzeichnet, dass** für die Rastverbindung der Lagerungsabschnitt (8) und/oder der weitere Lagerungsabschnitt (16) mindestens ein Rastelement (17) aufweist und dass das Anschlussstück (3) mindestens eine Ausnehmung (18) aufweist, in welche das mindestens eine Rastelement (17) eingreift, wobei das mindestens eine Rastelement bevorzugt am freien Ende (19) des weiteren Lagerungsabschnittes (16) angeordnet sind.

10. Rohrklemme (1) nach Anspruch 9, **dadurch gekennzeichnet, dass** der Lagerungsabschnitt (8, 16) mit dem mindestens einen Rastelement (17) durch den mindestens einen Schlitz (10) und/oder die Ausnehmung (13, 14) entlang der Mittelachse (M) gesehen unterbrochen ist.

11. Rohrklemme (1) nach einem der vorhergehenden Ansprüche, **dadurch gekennzeichnet, dass** eine Mehrzahl von Schlitzen (10), insbesondere drei Schlitze (10) oder insbesondere vier Schlitze, vorhanden ist, welche den Spannabschnitt (9) in eine Mehrzahl von Spannlaschen (20) unterteilen, wobei die Schlitze (10) vorzugsweise in gleichmässigen Abständen zueinander über den Umfang des Spannabschnittes (9) verteilt sind und/oder dass bezüglich einer sich durch die Mittelachse (M), welche sich mittig durch das Anschlussstück (3) hindurch erstreckt, hindurch erstreckende Ebene, die mittig durch das Ohr (9) verläuft jeweils zwei Schlitze auf jeder Seite der Ebene angeordnet sind.

12. Rohrklemme (1) nach einem der vorhergehenden Ansprüche, **dadurch gekennzeichnet, dass** die die Schlitze (10) und/oder die Ausnehmungen (13, 14) begrenzenden Wandbereiche (43) in parallelen Ebenen zueinander liegen.

13. Rohrklemme nach einem der vorhergehenden Ansprüche, **dadurch gekennzeichnet, dass** sich von der innenseitigen zylindrischen Oberfläche (21) des Spannabschnittes (9) mindestens eine um die Mittelachse (M) umlaufende Erhebung (22) erstreckt, wobei die Erhebung (22) mit einer Funktionsstruktur (32) an der Aussenseite des Anschlussstückes (3) zusammen arbeitet; oder dass die innenseitige zylindrische Oberfläche (21) des Spannabschnittes (9) zylindrisch mit konstantem Durchmesser ausgebildet ist.

14. Rohrklemme (1) nach einem der vorhergehenden Ansprüche, **dadurch gekennzeichnet, dass** der Spannring (7) über ein Anschlagselement (23), welches den Klemmring (4) zum Spannabschnitt (9) bezüglich einer axialen Bewegung festsetzt und/oder dass der Spannring (7) über Orientierungselemente verfügt, mit welchen der Spannring (7) zum Klemmring (4) derart ausrichtbar ist, dass der mindestens eine Schlitz (10) im ringförmigen Abschnitt (5) und nicht im Bereich des Ohrs (6) zu liegen kommt.

15. Rohrklemme (1) nach einem der vorhergehenden Ansprüche, **dadurch gekennzeichnet, dass** der Spannring (7) aussenseitig eine winklig geneigt zur Mittelachse (M) orientierte Montagefläche (24) aufweist, über welche Teile des Spannring (7), insbesondere die Spannabschnitt (9) bei der Montage des Klemmrings (5) gegen die Mittelachse (M) bewegbar ist.

## Claims

1. Pipe clamp (1) to connect a pipe (2) comprising a connection piece (3) that can be inserted into an end of the pipe (2), a clamping ring (4), which has a ring-shaped section (5) along its circumference and a lug (6) extending toward the outside in a radial manner, which can be pressed together by a tool, and a tension ring (7) that can be pressed together by the clamping ring (4), wherein the tension ring (7) comprises mounting section (8) and a clamping section (9) adjoining the mounting section (8), the clamping section (9) of which at least partially protrudes into the ring-shaped section (5) of the clamping ring (4) and primarily surrounds the pipe (2) in its entirety, wherein the clamping section (9) has at least one slit (10), the clear span of which can be approximately or fully eliminated in the pressed-together state of the clamping ring (4), wherein the tension ring (7) comprises at least one recess (13, 14), which adjoins the slit at least at one end area (11, 12) of the slit (10), wherein the clear span of the at least one recess (13, 14) becomes smaller when pressing together, **characterized in that** the clear span of the recess (13, 14) adjacent to the slit (10) has a maximum width and that the clear span becomes smaller as the distance to the slit (10) becomes greater.

2. Pipe clamp (1) according to Claim 1, **characterized in that** the clear span of the said recess (13, 14) is not fully eliminated in the pressed-together state; and/or that the clear span of the recess (13, 14) viewed transversely to a centre axis (M) extending through the middle of the connection piece (3) is greater in the unpressed state and, in particular, also in the pressed-together state, than the clear span of the slit (10) viewed transversely to the centre axis (M).

3. Pipe clamp (1) according to any one of the preceding claims, **characterized in that** the recess (13, 14) is symmetrical or asymmetrical with referent to a symmetry axis (A) extending through the middle of the slit (10); and/or
that the recess (13, 14) in the not-pressed-together state viewed from the centre axis (M) has the shape of a trapeze, wherein the slit (10) preferably flows into the trapeze via the longer side of the two parallel sides (15) of the trapeze; and/or that the at least one recess (13, 14) is positioned on the tension ring (7) in such a way that the recess (13, 14) is not covered by the clamping ring (4); and/or that the recess (13, 14) viewed from the clamping section (9) extends into the mounting section (8), wherein the mounting section (8) completely surrounds the centre axis (M) in sections.

4. Pipe clamp (1) according to any one of the preceding claims, **characterized in that** on both sides, a recess (13, 14) adjoins the slit (10) and/or that at least one recess (13, 14) is arranged for each slit (10).

5. Pipe clamp (1) according to any one of the preceding claims, **characterized in that** the recess (14) lying opposite to the mounting section (8), which adjoins the slit (10), interrupts the clamping section (9), wherein the clamping section (9) is a free end or that the slit (10) fully extends across the entire length of the mounting section (9) viewed from the recess (14) in the area of the mounting section (8), wherein the clamping section (9) is a free end (19).

6. Pipe clamp (1) according to any one of the preceding claims, **characterized in that** another mounting section (16) adjoins the clamping section (9) opposite the said mounting section (8), wherein one of the said recesses or the slit extends through the other mounting section (16) in the direction of the centre axis (M) so that the other mounting section (8) together with the clamping section (9) forms a free end.

7. Pipe clamp (1) according to any one of the preceding claims, **characterized in that** the recess (13, 14) is surrounded by a reinforcing rib (35).

8. Pipe clamp (1) according to any one of the preceding claims, **characterized in that** a snap connection is provided between the tension ring (7) and the connection piece (3).

9. Pipe clamp (1) according to Claim 8, **characterized in that** the mounting section (8) and/or the other mounting section (16) has at least one snap element (17) for the snap connection and that the connection piece (3) has at least one recess (18), in which the at least one snap element (17) engages, wherein the at least one snap element is preferably arranged on the free end (19) of the other mounting section (16).

10. Pipe clamp (1) according to Claim 9, **characterized in that** the mounting section (8, 16) with the at least one snap element (17) is interrupted by the at least one slit (10) and/or the recess (13, 14) viewed along the centre axis (M).

11. Pipe clamp (1) according to any one of the preceding claims, **characterized in that** a plurality of slits (10), in particular three slits (10) or, in particular, four slits, are available, which divide the clamping section (9) into a plurality of clamping links (20), wherein the slits (10) are preferably distributed at even distances to one another via the circumference of the clamping section (9) and/or that, with reference to a plane that extends through the centre axis (M), which extends through the middle of the connection piece (3), which runs through the middle of the lug (9), two slits are arranged on each side of the plane respectively.

12. Pipe clamp (1) according to one of the preceding claims, **characterized in that** the wall areas (43) bordering the slits (10) and/or the recesses (13, 14) are located at parallel planes to one another.

13. Pipe clamp according to any one of the preceding claims, **characterized in that** at least one projection (22) that extends runs around the centre axis (M) extends from the inside cylindrical surface (21) of the clamping section (9), wherein the projection (22) works with a functional structure (32) on the outside of the connection piece (3), or that the inside cylindrical surface (21) of the clamping section (9) is cylindrical with a constant diameter.

14. Pipe clamp (1) according to any one of the preceding claims, **characterized in that** the tension ring (7) has an end-stop element (23), which fixes the clamping ring (4) to the clamping section (9) with reference to an axial movement and/or that the tension ring (7) has orientation elements, by means of which the tension ring (7) can be aligned with the clamping ring (4) in such a way that the at least one slit (10) comes to rest in the ring-shaped section (5) and not in the area of the lug (6).

15. Pipe clamp (1) according to any one of the preceding claims, **characterized in that** the tension ring (7) has a mounting surface (24) on the outside orientated at an angle to the centre axis (M), via which parts of the tension ring (7), in particular the clamping section (9), can be moved when mounting the clamping ring (5) against the centre axis (M).

## Revendications

1. Collier de serrage (1) pour raccorder un tuyau (2), comprenant
une pièce de raccordement (3) pouvant être enfichée dans une extrémité du tuyau (2),
une bague de serrage (4) qui présente, le long de sa périphérie, une portion annulaire (5) et une oreille (6) s'étendant radialement vers l'extérieur, qui peut être comprimée par un outil, et
un anneau de serrage (7) pouvant être comprimé par la bague de serrage (4),
l'anneau de serrage (7) comprenant une portion de support (8) et une portion de serrage (9) se raccordant à la portion de support (8),
ladite portion de serrage (9) pénétrant au moins en partie dans la portion annulaire (5) de la bague de serrage (4), et entourant le tuyau (2) essentiellement complètement,
la portion de serrage (9) disposant d'au moins une fente (10) dont la largeur intérieure dans l'état comprimé de la bague de serrage (4) peut être supprimée approximativement ou complètement,
l'anneau de serrage (7) comprenant au moins un évidement (13, 14) qui se raccorde à la fente au moins dans une région d'extrémité (11, 12) de la fente (10), la largeur intérieure de l'au moins un évidement (13, 14) diminuant lors de la compression, **caractérisé en ce que** la largeur intérieure de l'évidement (13, 14) à côté de la fente (17) présente une largeur maximale et **en ce que** la largeur intérieure diminue avec l'augmentation de la distance à la fente (10).

2. Collier de serrage (1) selon la revendication 1, **caractérisé en ce que** la largeur intérieure dudit évidement (13, 14) dans l'état comprimé n'est pas complètement supprimée ; et/ou **en ce que** la largeur intérieure de l'évidement (13, 14), vu transversalement à un axe médian (M) s'étendant centralement à travers la pièce de raccordement (3), dans l'état non comprimé et en particulier également dans l'état comprimé, est supérieure à la largeur intérieure de la fente (10), vu transversalement à l'axe médian (M).

3. Collier de serrage (1) selon l'une quelconque des revendications précédentes, **caractérisé en ce que** l'évidement (13, 14) est symétrique ou asymétrique par rapport à un axe de symétrie (A) s'étendant à travers la fente (10) ; et/ou
**en ce que** l'évidement (13, 14), dans l'état non comprimé, présente la forme d'un trapèze, vu transversalement à l'axe médian (M), la fente (10) débouchant de préférence dans le trapèze par le biais du plus long des deux côtés parallèles (15) du trapèze ; et/ou
**en ce que** l'au moins un évidement (13, 14) est positionné au niveau de l'anneau de serrage (7) de telle sorte que l'évidement (13, 14) ne soit pas recouvert par la bague de serrage (4) ; et/ou
**en ce que** l'évidement (13, 14), vu depuis la portion de serrage (9), s'étend à l'intérieur de la portion de support (8), la portion de support (8) étant réalisée sur la circonférence en partie complètement autour de l'axe médian (M).

4. Collier de serrage (1) selon l'une quelconque des revendications précédentes, **caractérisé en ce qu'**un évidement (13, 14) se raccorde des deux côtés à la fente (10) et/ou **en ce qu'**au moins un évidement (13, 14) est prévu pour chaque fente (10) .

5. Collier de serrage (1) selon l'une quelconque des revendications précédentes, **caractérisé en ce que** l'évidement (14) opposé à la portion de support (8), qui se raccorde à la fente (10), interrompt la portion de serrage (9), la portion de serrage (9) étant une extrémité libre, ou **en ce que** la fente (10), vue depuis l'évidement (14) dans la direction de la portion de support (8), s'étend complètement sur toute la longueur de la portion de serrage (9), la portion de serrage (9) étant une extrémité libre (19).

6. Collier de serrage (1) selon l'une quelconque des revendications précédentes, **caractérisé en ce qu'**une portion de support supplémentaire (16) se raccorde à la portion de serrage (9) en regard de ladite portion de support (8), l'un desdits évidements, ou la fente, s'étendant à travers la portion de support supplémentaire (16) dans la direction de l'axe médian (M), de telle sorte que la portion de support supplémentaire (8) forme conjointement avec la portion de serrage (9) une extrémité libre.

7. Collier de serrage (1) selon l'une quelconque des revendications précédentes, **caractérisé en ce que** l'évidement (13, 14) est entouré d'une nervure de renforcement (35).

8. Collier de serrage (1) selon l'une quelconque des revendications précédentes, **caractérisé en ce qu'**entre l'anneau de serrage (7) et la pièce de raccordement (3) est réalisée une connexion par encliquetage.

9. Collier de serrage (1) selon la revendication 8, **caractérisé en ce que** pour la connexion par encliquetage, la portion de support (8) et/ou la portion de support supplémentaire (16), présentent au moins un élément d'encliquetage (17) et **en ce que** la pièce de raccordement (3) présente au moins un évidement (18) dans lequel s'engage l'au moins un élément d'encliquetage (17), l'au moins un élément d'encliquetage étant disposé de préférence à l'extrémité libre (19) de la portion de support supplémentaire (16).

10. Collier de serrage (1) selon la revendication 9, **caractérisé en ce que** la portion de support (8, 16) avec l'au moins un élément d'encliquetage (17) est interrompue par l'au moins une fente (10) et/ou l'évidement (13, 14), vu le long de l'axe médian (M).

11. Collier de serrage (1) selon l'une quelconque des revendications précédentes, **caractérisé en ce qu'**une pluralité de fentes (10), en particulier trois fentes (10) ou en particulier quatre fentes, est prévue, lesquelles divisent la portion de serrage (9) en une pluralité de pattes de serrage (20), les fentes (10) étant réparties de préférence à intervalles réguliers les unes par rapport aux autres sur la périphérie de la portion de serrage (9) et/ou **en ce que** par rapport à un plan s'étendant à travers l'axe médian (M), qui s'étend centralement à travers la pièce de raccordement (3), lequel plan s'étendant centralement à travers l'oreille (9), à chaque fois deux fentes sont disposées de chaque côté du plan.

12. Collier de serrage (1) selon l'une quelconque des revendications précédentes, **caractérisé en ce que** les régions de paroi (43) délimitant les fentes (10) et/ou les évidements (13, 14) sont situées dans des plans parallèles les unes par rapport aux autres.

13. Collier de serrage selon l'une quelconque des revendications précédentes, **caractérisé en ce qu'**au moins un rehaussement (22) s'étendant sur la périphérie autour de l'axe médian (M) s'étend depuis la surface cylindrique intérieure (21) de la portion de serrage (9), le rehaussement (22) coopérant avec une structure fonctionnelle (32) au niveau du côté extérieur de la pièce de raccordement (3) ; ou **en ce que** la surface cylindrique intérieure (21) de la portion de serrage (9) est réalisée de manière cylindrique avec un diamètre constant.

14. Collier de serrage (1) selon l'une quelconque des revendications précédentes, **caractérisé en ce que** l'anneau de serrage (7) dispose d'un élément de butée (23) qui fixe la bague de serrage (4) par rapport à la portion de serrage (9) par rapport à un déplacement axial et/ou **en ce que** l'anneau de serrage (7) dispose d'éléments d'orientation avec lesquels l'anneau de serrage (7) peut être orienté par rapport à la bague de serrage (4) de telle sorte que l'au moins une fente (10) vienne s'appliquer dans la portion annulaire (5) et pas dans la région de l'oreille (6).

15. Collier de serrage (1) selon l'une quelconque des revendications précédentes, **caractérisé en ce que** l'anneau de serrage (7) présente du côté extérieur une surface de montage (24) orientée de manière inclinée suivant un certain angle par rapport à l'axe médian (M), par le biais de laquelle des parties de l'anneau de serrage (7), en particulier la portion de serrage (9), peut être déplacée lors du montage de la bague de serrage (5) contre l'axe médian (M).
